# EUROPÄISCHE PATENTSCHRIFT

(11) **EP 3 047 125 B1**
(45) Veröffentlichungstag und Bekanntmachung des Hinweises auf die Patenterteilung: **08.11.2017**
(21) Anmeldenummer: 14766720.8
(22) Anmeldetag: 17.09.2014
(51) Int. Cl.: F01D 5/06, F04D 29/28, F04D 29/62, F02C 6/12, F01D 5/02

(54) **ABGASTURBOLADER**
EXHAUST GAS TURBOCHARGER
TURBOCOMPRESSEUR À GAZ D'ÉCHAPPEMENT

(30) Priorität: 20.09.2013 DE 102013015563
(43) Veröffentlichungstag der Anmeldung: 27.07.2016
(73) Patentinhaber: ABB Turbo Systems AG, 5400 Baden (CH)
(72) Erfinder: MORATH, Christoph, 79777 Ühlingen-Birkendorf (DE); GANTERT, Stefan, 79807 Lottstetten (DE)
(74) Vertreter: ABB Patent Attorneys
(86) Internationale Anmeldenummer: PCT/EP2014/069750
(87) Internationale Veröffentlichungsnummer: WO 2015/040038

(56) Entgegenhaltungen:
- EP-A2- 1 130 220
- US-A1- 2007 122 296
- US-A1- 2008 098 735

## Beschreibung

### Technisches Gebiet

Die Erfindung bezieht sich auf das Gebiet der Abgasturbolader für aufgeladene Brennkraftmaschinen.

Sie betrifft einen Abgasturbolader mit einem Turbinenrad und einem Verdichterrad, welche über eine Welle miteinander verbunden sind, wobei zwischen dem Verdichterrad und dem Turbinenrad ein Mittel zur axialen Sicherung der Welle und des mit ihr verbundenen Turbinenrades im Falle des Berstens des Verdichterrades vorgesehen ist.

### Stand der Technik

Für die Leistungssteigerung einer Brennkraftmaschine (Verbrennungsmotor) werden heutzutage standardmässig Abgasturbolader mit einem der Brennkammer der Brennkraftmaschine Luft für den Verbrennungsvorgang zuführenden Verdichter und einer Abgasturbine im Abgastrakt der Brennkraftmaschine eingesetzt. Mit der Aufladung der Brennkraftmaschine wird die Luft- und Kraftstoffmenge in den Brennkammern (Zylindern) erhöht und daraus ein merklicher Leistungsanstieg für die Brennkraftmaschine gewonnen. Der dafür verwendete Abgasturbolader setzt sich standardmässig aus einem Rotor, bestehend aus einem Verdichterrad und einem Turbinenrad sowie der Wellenlagerung, den strömungsführenden Gehäuseteilen (Verdichtergehäuse, Turbinengehäuse) und dem Lagergehäuse zusammen.

Im Volllastbetrieb der Brennkraftmaschine werden am Abgasturbolader sehr hohe Umfangsgeschwindigkeiten an den Spitzendurchmessern der Turbinen- sowie der Verdichterräder erreicht. Die maximal zulässige Rotordrehzahl eines Abgasturboladers ist eine Funktion der Radgrösse, der Geometrie sowie der Festigkeitswerte der verwendeten Materialien. Generell unterliegen die rotierenden Komponenten sehr hohen Fliehkraftbelastungen und somit hohen Materialspannungen. Fehlstellen im Materialgefüge können unter Umständen zum Bersten des Verdichter- oder Turbinenrades führen, mit teils schwerwiegenden Folgen für die Gehäuseteile, welche die rotierenden Komponenten umgeben. Das Containmentkonzept eines Abgasturboladers ist grundsätzlich dahingehend auszulegen, dass sämtliche Bruchstücke innerhalb des Aussengehäuses zurückgehalten werden und die Umgebung des Laders nicht gefährden.

Im Falle einer Verdichterradhavarie durch ein auseinanderbrechendes Verdichterrad entfällt das bremsende Moment am Turboladerrotor, womit die nun frei antreibende Turbine auf Überdrehzahl beschleunigt und bei Erreichen der natürlichen Berstdrehzahl versagt. Beim natürlichen Bersten einer Radialturbine wird zwischen zwei Arten von Bersten unterschieden.

Beim Nabenbersten zerfällt der gesamte Nabenkörper inklusive der Turbinenschaufeln in mehrere Bruchstücke, wobei augenblicklich die gesamte Rotationsenergie der Turbine freigesetzt wird. Die mit grosser Wucht nach Aussen geschleuderten Bruchstücke beschädigen die umgebenden Gehäuseteile erheblich und können diese im schlimmsten Falle sogar durchschlagen und dadurch die Umgebung des Turboladers gefährden.

Andererseits kann die Turbine so ausgelegt werden, dass diese durch Schaufelbersten versagt. Dabei versagen die Turbinenschaufeln im Fussbereich zum Nabenkörper hin, während die Radnabe des Turbinenrades intakt bleibt, weiter rotiert und erst durch Reibung an den umgebenden Gehäuseteilen abgebremst wird. Da beim Schaufelbersten im ersten Moment lediglich die Turbinenschaufeln von der Radnabe gelöst sind, wird vorerst nur der kinetische Energieanteil der Schaufeln an die Umgebung abgegeben. Im Verlaufe des Auslaufens wird die restliche Rotationsenergie, d.h. der Anteil in der Nabe, durch die erwähnte Reibung an die Gehäuse abgegeben.

Beim Schaufelbersten einer Radialturbine bei deren natürlichen Berstdrehzahl besteht generell die Schwierigkeit, dass nach dem Schaufelabwurf eine Restenergie im nicht berstenden Nabenkörper verbleibt. Hierbei ist es wichtig, dass die Welle in axiale Richtung gesichert ist und nicht aus dem Turboladergehäuse in axialer Richtung austreten und in die Gasaustrittsleitung gelangen kann. Ein frei rotierendes Bauteil in den Gasaustrittsleitungen der Turbine ist nicht erwünscht, da dieses unkontrollierbar ist und eine Schädigung der Abgasleitungen verursachen kann.

Aus der EP 1353 041 A1 ist ein Abgasturbolader bekannt, bei welchem auf der mit dem Turbinenrad verbundenen Welle ein Mittel zur axialen Sicherung der Welle und des mit ihr verbundenen Turbinenrades angeordnet ist. Das Sicherungsmittel verhindert im Falle des Berstens des Verdichterrades eine axiale Bewegung der Welle und des mit ihr verbundenen Turbinenrades in Richtung Turbine. Das Sicherungsmittel ist beispielsweise ein Sprengring, welcher in einer Nut in der Welle angeordnet ist, und im eingebauten Zustand zusammen mit Gehäuseteilen einen Axialanschlag für die Welle bildet.

Zusätzliche Teile zur axialen Sicherung der Welle und des mit ihr verbundenen Turbinenrades bedeuten jedoch einen erhöhten Montageaufwand. Im Falle des Sprengringes ist dieser zusätzlich sehr schlecht automatisierbar und muss manuell durchgeführt werden.

Aus DE 10 2008 056 058 A1 und DE 10 2008 056 059 A1 sind Verbindungen von Verdichterräder auf Turbolader-Wellen bekannt, bei welchen jeweils zwischen dem Verdichterrad und der Welle ein auf die Welle aufgeschraubtes Bauelement vorgesehen ist, mit welchem im Falle eines Verdichterradbruchs das Austreten der Welle mit dem daran befestigten Nabenkörper des Turbinenrades in turbinenseitige Richtung verhindern werden kann. Das Bauelement ist im montierten Zustand über ein Gewinde mit der Welle verbunden und über einen Axialanschlag mit der Welle verspannt.

Aus US 2008/098735 A1 und US 2007/122296 A1 sind Turbolader gemäss dem Oberbegriff des Anspruches 1 bekannt.

### Kurze Darstellung der Erfindung

Der vorliegenden Erfindung liegt die Aufgabe zugrunde, die Welle des Abgasturboladers mit einer Sicherungsvorrichtung zu versehen, welche im Falle eines Verdichterradbruchs das Austreten der Welle mit dem daran befestigten Nabenkörper des Turbinenrades in turbinenseitige Richtung verhindern kann, und mit welcher sich die Welle und das Turbinenrad auf einfache Weise montieren und demontieren lässt.

Der Abgasturbolader umfasst eine Turbine mit einem Turbinenrad und einen Verdichter mit einem Verdichterrad. Das Turbinenrad und das Verdichterrad sind über eine in einem Lagergehäuse drehbar gelagerte Welle miteinander verbunden. Die Lager sind in bevorzugter Weise zwischen Turbinenrad und Verdichterrad angeordnet. Zwischen dem Verdichterrad und dem Turbinenrad ist ein Mittel zur axialen Sicherung der Welle und des mit ihr verbundenen Turbinenrades vorgesehen, wobei dieses Mittel zur axialen Sicherung im Falle des Berstens des Verdichterrades eine axiale Bewegung der Welle und des mit ihr verbundenen Turbinenrades in Richtung der Turbine einschränkt oder verhindert.

Erfindungsgemäss umfasst das Mittel zur axialen Sicherung der Welle und des mit ihr verbundenen Turbinenrades ein Bauelement, das mit der Welle verbunden oder auf der Welle montiert und durch einen Axialanschlag am Gehäuse in seiner Bewegungsfreiheit in axialer Richtung zur Turbinenseite hin begrenzt ist. Dieses Bauelement zur axialen Sicherung wird bei der Montage erfindungsgemäss auf die Welle aufgeschraubt. Dazu ist das besagte Bauelement mit einem Innengewinde versehen. Passend dazu weist die Welle ein entsprechendes Aussengewinde auf, das das Aufschrauben des Bauelementes auf die Welle ermöglicht. Hierbei ist der kleinste Innendurchmesser des Innengewindes des Bauelementes kleiner als der grösste Aussendurchmesser des Aussengewindes der Welle.

Erfindungsgemäss weist das Aussengewinde auf der Welle am turbinenseitigen Ende einen Freistich auf, so dass sich das Bauelement bei der Montage auf der Welle soweit in axiale Richtung über das Aussengewinde hinweg aufschrauben lässt, bis es sich im montierten Zustand in einem gewindelosen Freistich befindet. Anschliessend wird das Bauelement durch Aufschrauben des Verdichterrades auf das Aussengewinde auf der Welle zwischen Verdichterrad und einem Axialanschlag an der Welle verspannt. Dadurch wird ein Verklemmen im Gewindebereich beim Verspannen zwischen Verdichterrad und Axialanschlag im montierten Zustand verhindert. Im Falle des Berstens jedoch, sollte sich das Verdichterrad vom Gewinde lösen, verhindern die Gewindegänge am Bauelement in Kombination mit den Gewindegängen auf der Welle zusammen mit den Lagergehäuseteilen eine axiale Bewegung der Welle und des mit ihr verbundenen Turbinenrades in Richtung Turbine.

Optional kann es sich bei dem Bauelement, welches zur axialen Sicherung der Welle und des mit ihr verbundenen Turbinenrades verwendet wird, um einen Dichtring handeln. Dies hat den Vorteil, dass keine weiteren Teile zur axialen Sicherung der Welle und des mit ihr verbundenen Turbinenrades benötigt werden und der Montageaufwand somit gesenkt beziehungsweise die Automatisierung erhöht werden kann.

Weitere Vorteile ergeben sich aus den abhängigen Ansprüchen.

### Kurze Beschreibung der Zeichnungen

Nachfolgend werden die erfindungsgemässe Dichtscheibe und die dazugehörige Ausführung der Welle für einen Abgasturbolader beschrieben und anhand von beispielhaften Zeichnungen detailliert erläutert. Gleichwirkende Elemente sind in den verschiedenen Figuren mit den gleichen Bezugszeichen versehen. Dabei zeigt
- Fig. 1: einen schematischen Längsschnitt durch einen Abgasturbolader gemäss dem Stand der Technik, mit einer in einem Gehäuse rotierbar gelagerten Welle und einem mit ihr verbundenen Turbinenrad, sowie mit einem auf der Welle aufgesetzten Verdichterrad,
- Fig. 2: eine Seitenansicht einer beispielhaften Ausführungsform des erfindungsgemässen Mittels zur axialen Sicherung der Welle und des mit ihr verbundenen Turbinenrades, mit einer mit einem Gewinde versehenen Dichtscheibe, die im montierten Zustand in einem Freistich verbaut ist.

### Weg zur Ausführung der Erfindung

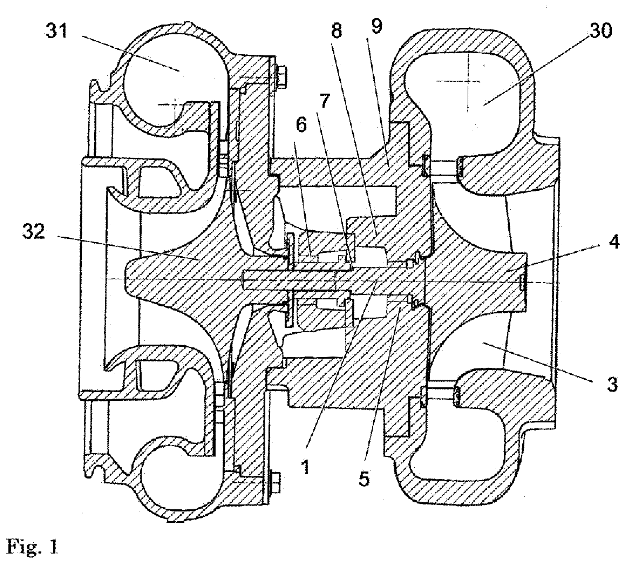

Fig. 1 zeigt einen Abgasturbolader gemäss dem Stand der Technik mit einem Radialverdichter und einer Radialturbine. Die Radialturbine umfasst ein Turbinenrad mit einem Nabekörper 4 und darauf befestigten Laufschaufeln 3. Das Turbinenrad ist auf der im Lagergehäuse 9 in Radiallagern 5 und 6 drehbar gelagerten Welle 1 befestigt oder einteilig mit dieser ausgeführt. Das Turbinengehäuse 30 umschliesst das Turbinenrad und begrenzt die Strömungskanäle, welche das heisse Abgas von der Brennkraftmaschine über das Turbinenrad zu den Auspuffanlagen führen. Der Radialverdichter umfasst ein Verdichterrad 32, welches ebenfalls auf der Welle 1 befestigt ist. Das Verdichtergehäuse 31 begrenzt die verdichterseitigen Strömungskanäle und setzt sich in der Regel aus mehreren Gehäuseteilen zusammen.

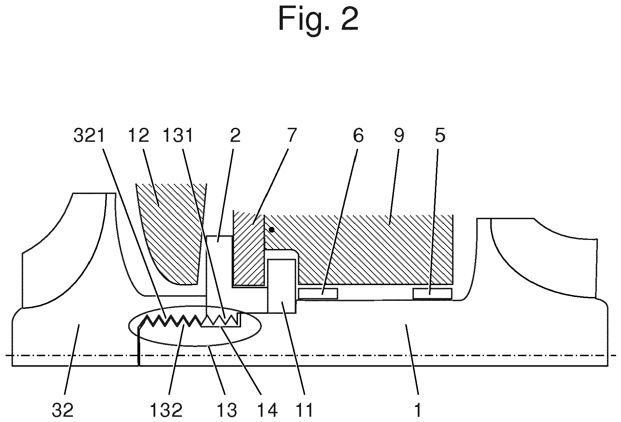

Eine erste und zweite Ausführungsform eines erfindungsgemässen Mittels zur axialen Sicherung der Welle 1 und des mit ihr verbundenen Turbinenrades für ein turbinenseitiges Berstkonzept eines Abgasturboladers bei Schaufelbersten umfasst die in den Figur 2 und 3 dargestellte und hiernach erläuterte Vorrichtung.

Das erfindungsgemässe Mittel zur axialen Sicherung der Welle 1 und des mit ihr verbundenen Turbinenrades umfasst ein Bauelement 2 mit einem Innengewinde 131, und ein an der Welle 1 angebrachtes Aussengewinde 132. Das Bauelement 2 wird auf der Welle montiert, so dass das Innengewinde 131 des Bauelements 2 und das Aussengewinde 132 an der Welle 1 gemeinsam eine Schraubverbindung 13 bilden, wobei der kleinste Innendurchmesser des Innengewindes 131 des Bauelementes 2 kleiner ist als der grösste Aussendurchmesser des Aussengewindes 132 der Welle 1. Bei der Montage kann das besagt Bauelement 2 somit auf die Welle 1 aufgeschraubt werden. Im montierten Zustand dient das Bauelement 2 als axiales Sicherungselement, wobei ein Axialanschlag am Lagergehäuse 9 eine Bewegung der Welle 1 in axiale Richtung begrenzt. Der Axialanschlag kann entweder direkt, das heisst, dass das Bauelement 2 im Berstfall direkt am Lagergehäuse 9 aufliegt, oder indirekt sein, das heisst, dass sich weitere Elemente, beispielweise eine Spurscheibe 11, zwischen dem Bauteil 2 und dem Lagergehäuse 9 befinden und das Bauteil 2 somit im Berstfall nur indirekt am Lagergehäuse 9 aufliegt.

Bei dem besagten erfindungsgemäss zur axialen Sicherung eingesetztes Bauelement kann es sich um eine Dichtscheibe 2 handeln, die durch ihre Positionierung und Fixierung in axiale Richtung durch das Lagergehäuse 9 die Funktion des axialen Sicherungselementes erfüllt. Die Dichtscheibe 2 ist dabei vorzugsweise aus einem hartem Material zum Beispiel Stahl gefertigt, um im Falle eines Bruchs des Verdichterrades die entstehenden axialen Kräfte ohne Einschränkung der Rückhaltefunktion aufnehmen zu können.

In Fig. 2 ist eine beispielhafte Ausführungsform der Erfindung abgebildet. Dies besteht erfindungsgemäss aus einer Dichtscheibe 2 mit einem Innengewinde 131 sowie einem an der Welle 1 angebrachten Aussengewinde 132. Das an der Welle 1 angebrachte Aussengewinde 132 weist in der beispielhaften Ausführungsform gegenüber der ersten Ausführungsform in axiale Richtung der Welle 1 eine reduzierte Länge auf, wodurch sich am turbinenseitigem Ende des Aussengewindes 132 ein gewindeloser Freistich 14 ergibt, welcher erfindungsgemäss in axialer Richtung mindestens eine der Dicke der Dichtescheibe 2 entsprechende Länge hat. Im montierten Zustand befindet sich das Innengewinde 131 der Dichtscheibe 2 in besagtem Freistich 14, wodurch ein unerwünschtes Verklemmen der Dichtscheibe 2 im Gewindegang ausgeschlossen wird. Bei der Montage wird die Welle 1 wiederum von der Turbinenseite (von rechts in Fig. 2) her zur Verdichterseite hin (nach links) durch die Dichtscheibe 2 hindurch geschraubt, bis sich das Gewinde der Dichtscheibe 2 vollständig im Freistich 14 befindet. Nach der Montage des Verdichterrades 32 ist die Dichtscheibe 2 in einem Pressverbund zwischen dem Verdichterrad 32 und einem Axialanschlag an der Welle eingeklemmt, wodurch die Dichtscheibe 2 im Betriebszustand fest mit der Welle 1 verbunden ist.

Optional können in diesem Klemmverbund weitere Bauelemente, wie etwa eine Spurscheibe 11 angeordnet sein. Im Lagergehäuse 9 ist die Dichtscheibe 2 zwischen dem Lagerdeckel 12 und dem fest mit dem Lagergehäuse verbundenen Axiallager 7 angeordnet. Am Axiallager 7 liegt die Dichtscheibe 2 zur Begrenzung der axialen Bewegung der Welle in Richtung der Turbine an. Die Begrenzung der axialen Bewegung kann auch über andere Bauteile erfolgen. Beispielsweise kann die Welle 1 über die Dichtscheibe 2 und ein Anliegen einer Spurscheibe 11 am Lagergehäuse 9 axial gesichert werden.

### Bezugszeichenliste

- 1: Turboladerwelle
- 2: Bauelement / Dichtscheibe
- 3: Laufschaufeln des Turbinenrades
- 4: Nabenkörper des Turbinenrades
- 5: Turbinenseitiges Radiallager
- 6: Verdichterseitiges Radiallager
- 7: Axiallager
- 8: Flansch des Lagergehäuses
- 9: Lagergehäuse
- 11: Spurscheibe
- 12: Lagerdeckel
- 13: Schraubverbindung
- 131: Innengewinde am Bauelement
- 132: Aussengewinde auf der Welle
- 14: Freistich
- 30: Turbinengehäuse
- 31: Verdichtergehäuse
- 32: Verdichterrad
- 321: Innengewinde am Verdichterrad

## Patentansprüche

1. Abgasturbolader, umfassend eine Turbine mit einem Turbinenrad (4) und einen Verdichter mit einem Verdichterrad (32), wobei das Turbinenrad (4) und das Verdichterrad (32) über eine in einem Lagergehäuse (9) drehbar gelagerten Welle (1) miteinander verbunden sind,
wobei zwischen dem Verdichterrad (32) und dem Turbinenrad (4) ein Mittel zur axialen Sicherung der Welle (1) und des mit ihr verbundenen Turbinenrades (4) vorgesehen ist, wobei dieses Mittel zur axialen Sicherung im Falle eines Berstens des Verdichterrades (32) eine axiale Bewegung der Welle (1) und des mit ihr verbundenen Turbinenrades (4) in Richtung der Turbine begrenzt, wobei
das Mittel zur axialen Sicherung der Welle (1) und des mit ihr verbundenen Turbinenrades (4) ein Bauelement (2) umfasst, welches auf der Welle montiert ist, wobei
das Mittel zur axialen Sicherung der Welle (1) und des mit ihr verbundenen Turbinenrades (4) weiter ein an der Welle (1) angebrachtes Aussengewinde (132) umfasst, wobei
das Mittel zur axialen Sicherung der Welle (1) und des mit ihr verbundenen Turbinenrades (4) weiter einen Axialanschlag am Lagergehäuse umfasst, wobei
der Axialanschlag am Lagergehäuse im Falle eines Berstens des Verdichterrades (32) die axiale Bewegung des Bauelementes (2) und somit die axiale Bewegung der Welle in Richtung der Turbine begrenzt, wobei
das an der Welle (1) angebrachte Aussengewinde (132) am turbinenseitigen Ende des Aussengewindes (132) einen Freistich (14) aufweist
**dadurch gekennzeichnet, dass**
das Bauelement (2) mit einem Innengewinde (131) versehen ist, dass
das Innengewinde (131) des Bauelementes (2) beim Montieren des Bauelements (2) auf die Welle (1) mit dem an der Welle (1) angebrachten Aussengewinde (132) eine Schraubverbindung (13) eingeht, und dass
das Innengewinde (131) des Bauelementes (2) im montierten Zustand im Freistich (14) des Aussengewindes angeordnet ist.

2. Abgasturbolader nach Anspruch 1, wobei die Schraubverbindung (13) mehrgängige Gewinde umfasst.

3. Abgasturbolader nach einem der Ansprüche 1 oder 2, wobei es sich bei dem Bauelement (2) um einen Dichtring handelt.

4. Abgasturbolader nach einem der Ansprüche 1 bis 3, wobei die Welle (1) ein Aussengewinde (132) zum Aufschrauben des Verdichterrades (32) aufweist und es sich bei dem an der Welle (1) angebrachten Aussengewinde (132) für das Aufschrauben des Bauelementes (2) um dasselbe Aussengewinde (132) handelt, das auch der Befestigung des Verdichterrades (32) dient.

## Claims

1. Exhaust turbocharger comprising a turbine having a turbine wheel (4) and a compressor having a compressor wheel (32), wherein the turbine wheel (4) and the compressor wheel (32) are connected to one another by means of a shaft (1) rotatably mounted in a bearing housing (9),
wherein a means for axially securing the shaft (1) and the turbine wheel (4) connected thereto is provided between the compressor wheel (32) and the turbine wheel (4), wherein this means for axial securing limits an axial movement of the shaft (1) and of the turbine wheel (4) connected thereto in the direction of the turbine in the event of the compressor wheel (32) bursting, wherein
the means for axially securing the shaft (1) and the turbine wheel (4) connected thereto comprises a component (2) which is mounted on the shaft, wherein
the means for axially securing the shaft (1) and the turbine wheel (4) connected thereto furthermore comprises an external thread (132) formed on the shaft (1), wherein
the means for axially securing the shaft (1) and the turbine wheel (4) connected thereto furthermore comprises an axial stop on the bearing housing, wherein the axial stop on the bearing housing limits the axial movement of the component (2) and thus the axial movement of the shaft in the direction of the turbine in the event of the compressor wheel (32) bursting, wherein
the external thread (132) formed on the shaft (1) has an undercut (14) at the turbine end of the external thread (132),
**characterized in that**
the component (2) is provided with an internal thread (131), **in that**
the internal thread (131) of the component (2) enters into a screwed joint (13) with the external thread (132) formed on the shaft (1) when the component (2) is mounted on the shaft (1), and **in that**
the internal thread (131) of the component (2) is arranged in the undercut (14) of the external thread in the mounted state.

2. Exhaust turbocharger according to Claim 1, wherein the screwed joint (13) comprises multi-start threads.

3. Exhaust turbocharger according to either of Claims 1 or 2, wherein the component (2) is a sealing ring.

4. Exhaust turbocharger according to one of Claims 1 to 3, wherein the shaft (1) has an external thread (132) for screwing on the compressor wheel (32), and the external thread (132), formed on the shaft (1), for screwing on the component (2) is the same external thread (132) which is also used to fasten the compressor wheel (32).

## Revendications

1. Turbocompresseur à gaz d'échappement, comprenant une turbine avec une roue de turbine (4) et un compresseur avec une roue de compresseur (32), dans lequel la roue de turbine (4) et la roue de compresseur (32) sont reliées l'une à l'autre par un arbre (1) monté de façon rotative dans un logement de palier (9),
dans lequel il est prévu entre la roue de compresseur (32) et la roue de turbine (4) un moyen de blocage axial de l'arbre (1) et de la roue de turbine (4) assemblée à celui-ci, dans lequel ce moyen de blocage axial limite, en cas de rupture de la roue de compresseur (32), un mouvement axial de l'arbre (1) et de la roue de turbine (4) assemblée à celui-ci en direction de la turbine,
dans lequel le moyen de blocage axial de l'arbre (1) et de la roue de turbine (4) assemblée à celui-ci comprend un élément de construction (2), qui est monté sur l'arbre,
dans lequel le moyen de blocage axial de l'arbre (1) et de la roue de turbine (4) assemblée à celui-ci comprend en outre un filet extérieur (132) réalisé sur l'arbre (1),
dans lequel le moyen de blocage axial de l'arbre (1) et de la roue de turbine (4) assemblée à celui-ci comprend en outre une butée axiale sur le logement de palier,
dans lequel la butée axiale sur le logement de palier limite, en cas de rupture de la roue de compresseur (32), le mouvement axial de l'élément de construction (2) et dès lors le mouvement axial de l'arbre en direction de la turbine,
dans lequel le filet extérieur (132) réalisé sur l'arbre (1) présente une rainure de dégagement (14) à l'extrémité du filet extérieur (132) proche de la turbine,
**caractérisé en ce que**
l'élément de construction (2) est doté d'un filet intérieur (131),
le filet intérieur (131) de l'élément de construction (2) s'engage dans un assemblage vissé (13) avec le filet extérieur (132) réalisé sur l'arbre (1) lors du montage de l'élément de construction (2) sur l'arbre (1), et
le filet intérieur (131) de l'élément de construction (2) à l'état monté est disposé dans la rainure de dégagement (14) du filet extérieur.

2. Turbocompresseur à gaz d'échappement selon la revendication 1, dans lequel l'assemblage vissé (13) comprend des filets à filetage multiple.

3. Turbocompresseur à gaz d'échappement selon une des revendications 1 ou 2, dans lequel l'élément de construction (2) est une bague d'étanchéité.

4. Turbocompresseur à gaz d'étanchéité selon l'une quelconque des revendications 1 à 3, dans lequel l'arbre (1) présente un filet extérieur (132) pour le vissage de la roue de compresseur (32) et le filet extérieur (132) réalisé sur l'arbre (1) pour le vissage de l'élément de construction (2) est le même filet extérieur (132), qui sert aussi pour la fixation de la roue de compresseur (32).
